Europäisches Patentamt

European Patent Office

Office européen des brevets

(19)

(11) **EP 0 494 555 B1**

(12) # FASCICULE DE BREVET EUROPEEN

(45) Date de publication et mention
de la délivrance du brevet:
**20.03.1996 Bulletin 1996/12**

(51) Int Cl.6: **H04L 25/08**

(21) Numéro de dépôt: **91403337.8**

(22) Date de dépôt: **10.12.1991**

(54) **Récepteur de ligne pour un réseau de transmission d'informations**

Leitungsempfänger für ein Nachrichtenübertragungsnetz

Line receiver for an information transmission network

(84) Etats contractants désignés:
**DE ES GB IT**

(30) Priorité: **11.12.1990 FR 9015468**

(43) Date de publication de la demande:
**15.07.1992 Bulletin 1992/29**

(73) Titulaire: **REGIE NATIONALE DES USINES
RENAULT S.A.
F-92109 Boulogne Billancourt (FR)**

(72) Inventeur: **Lenoir, Dominique
F-92360 Meudon la Foret (FR)**

(56) Documents cités:
**EP-A- 0 337 762**      **US-A- 3 825 682**

**Description**

La présente invention concerne un récepteur de ligne destiné à assurer le filtrage sur un réseau de transmission d'informations de type réseau local et comportant un filtre dont les deux entrées sont reliées au réseau de transmission d'informations et les deux sorties sont reliées à un comparateur.

On connaît des réseaux de transmission par multiplexage d'informations destinés aux véhicules. Chaque sous-système ou station ayant à communiquer se raccorde au bus de réseau grâce à un circuit d'interface de ligne. Cette interface de ligne a pour fonction d'assurer la liaison entre le bus du réseau constitué par deux fils et un gestionnaire de protocole associé à la station. Elle réalise la mise en forme des signaux logiques issus du gestionnaire de protocole sous une forme compatible du bus (signaux analogiques).

Le document FR-A- 2.627.036 décrit une interface raccordant une station au bus bifilaire et comportant un filtre. Les documents US-A-3 825 682 et EP-A-0 337 762 décrivent des récepteurs de ligne, leur but étant d'améliorer l'immunité en cas de variation de voltage sur les entrées.

La présente invention a pour but de fournir un récepteur perfectionné quant à la réduction du retard occasionné par le filtre et/ou à l'augmentation de l'immunité à une perturbation.L' avantage apporté tient au temps de récupération du filtre (temps nécessaire après une commutation pour retrouver en sortie du filtre la tension de repos).Cet avantage peut se traduire soit par une amélioration du temps de transfert du filtre soit par augmentation de l'immunité à temps de transfert constant.

Le récepteur selon l'invention est caractérisé par le fait que le filtre se compose de deux filtres passe-bande reliés chacun par un étage d'entrée au réseau et reliés l'un à l'autre, la sortie de chaque filtre passe-bande étant connectée à la liaison des deux filtres par un interrupteur commandé par un circuit de commande piloté par le signal de sortie du comparateur.

Selon une caractéristique, le circuit de commande est constitué par une porte logique.

Selon une caractéristique, chaque filtre passe-bande est du type pont de Wien.

Selon une caractéristique, chaque étage d'entrée se compose d'une résistance et d'un condensateur .

L'invention va maintenant être décrite avec plus de détail en se référant à un mode de réalisation donné à titre d'exemple et représenté par les dessins annexés sur lesquels :

-    La figure 1 est un schéma du montage du récepteur selon l'invention dans un réseau de transmission de données.

-    La figure 2 est une vue de détail du récepteur.

-    La figure 3 est un schéma de la logique de commande du filtre équipant le récepteur.

-    La figure 4 est un diagramme tension-temps illustrant le fonctionnement.

Le récepteur selon l'invention comporte un filtre 1 dont les bornes d'entrée $e_1$ et $e_2$ sont raccordées à des fils de transmission d'informations 2 et 3 (bus). Les données sur les fils 21 et 22 sont émises par un émetteur repéré 5.

Les sorties $s_1$ et $s_2$ du filtre 1 sont respectivement raccordées aux entrées non-inverseuse et inverseuse d'un comparateur 4, dont la sortie $s_3$ est reliée à un circuit du réseau par exemple au gestionnaire du protocole .

Le filtre 1 se compose de deux parties distinctes mais liées au niveau de l'optimisation de l'ensemble.

Chaque fil 21 ou 22 du bus du réseau est connecté à l'entrée $e_1$ ou $e_2$ d'un étage d'entrée 11 ou 12. Chaque étage d'entrée 11 ou 12 est connecté à un filtre passe-bande 13 ou 14 à atténuation limitée dans les basses fréquences. Les sorties des passe-bandes 13 et 14 sont repérées $s_1$ et $s_2$ respectivement.

Chaque étage d'entrée 11 ou 12 est un filtre passe-bas constitué d'une résistance $R_1$ et et d'un condensateur $C_1$ à la masse. Il détermine l'immunité vis-à-vis des rayonnements électromagnétiques. Il a pour fonction de limiter l'énergie et l'amplitude des signaux hautes fréquences résultant d'un couplage électromagnétique et de protéger les étages suivants.

La résistance $R_1$ se comporte comme une pseudo adaptation d'impédance de la ligne en mode dynamique vis-à-vis du mode commun. La valeur de $R_1$ doit être choisie dans l'intervalle 50 $\Omega$ - 180 $\Omega$. La valeur de la capacité $C_1$ détermine l'immunité aux rayonnements électromagnétiques. Plus la valeur de cette capacité est importante, meilleure est l'immunité et plus le temps de propagation croît.

Le filtre passe-bande 13 ou 14 est de type Pont de Wien. Il complète le filtrage effectué par l'étage d'entrée 11 ou 12 et a pour fonction d'améliorer l'immunité, de rendre le temps de propagation quasi-indépendant de la charge du bus et de s'affranchir des variations de la tension différentielle du bus.

Chaque filtre pose-bande 13 ou 14 se compose d'une résistance $R_2$ et d'un condensateur $C_2$ montés en série, d'une résistance $R_3$ reliée à la résistance $R_3$ de l'autre filtre 14 ou 13 respectivement et d'un condensateur $C_3$ relié au condensateur $C_3$ de l'autre filtre.

Chaque sortie $s_1$ ou $s_2$ du filtre passe-bande est connectée par une résistance Rx et un interrupteur 61 ou 62 à la tension de référence V $_{réf}$ (jonction des deux résistances $R_3$ et des deux condensateurs $C_3$). Chaque interrupteur 61 ou 62 est commandé par un circuit de commande 5 dont l'entrée est connectée par 54 à la sortie du comparateur 4.

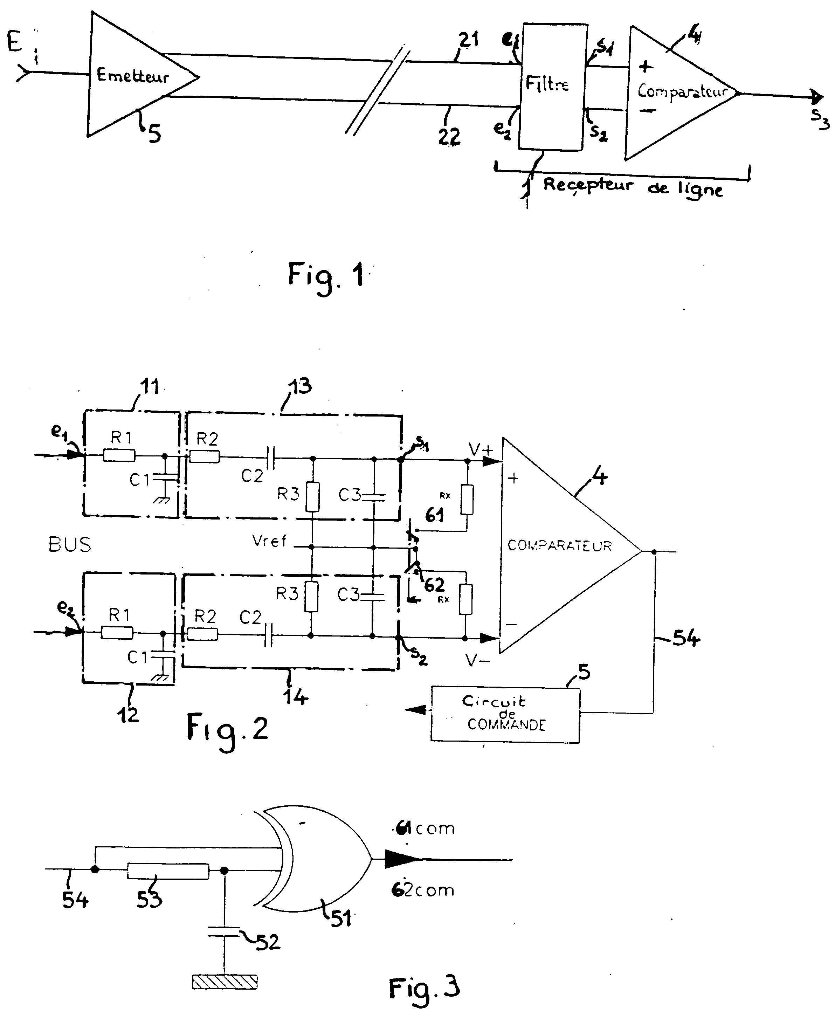

Ce circuit de commande 5 peut être constitué par une porte logique telle que la porte OU-exclusif représentée à la figure 3.Le signal de sortie du comparateur est injecté sur une entrée d'une porte 51 et sur une résistance 53 associée à un condensateur 52 et connectée à la seconde entrée de la porte 51.

Les valeurs de $R_2, R_3, C_2, C_3$ doivent être choisies de manière à tenir compte de l'impédance de sortie de l'étage d'entrée du récepteur de ligne.

Pour le fonctionnement en mode collision , le temps de propagation qui pénalise la transmission est le temps de propagation correspondant au passage de l'état dominant à l'état récessif (D -> R).

L'état récessif est caractérisé par un courant I rec de 1mA fourni par chaque station connectée au bus. Le courant $I_{rec}$ sera donc localisé à chaque station pour le passage (D -> R).

A titre d'exemple, pendant la phase transitoire(D -> R), on a sur chaque fil de données:

$$\frac{Irec}{C1} = \frac{dv}{dt}$$

Le paramètre $\frac{dv}{dt}$ permet d'optimiser la bande passante du pont de WIEN dont la fréquence centrale est:

$$F \, cent = \frac{1}{2.\pi.R2.C2}$$

avec R2 = R3 et C2 = C3.

Le fonctionnement du récepteur va maintenant être décrit.

A chaque commutation du comparateur 4, le filtre 1 est initialisé par la fermeture des interrupteurs 61 et 62 commandés par la logique de commande 5.
L'initialisation autorise une succession rapide des commutations sur les entrées $e_1$ et $e_2$ d'où un débit plus élevé.

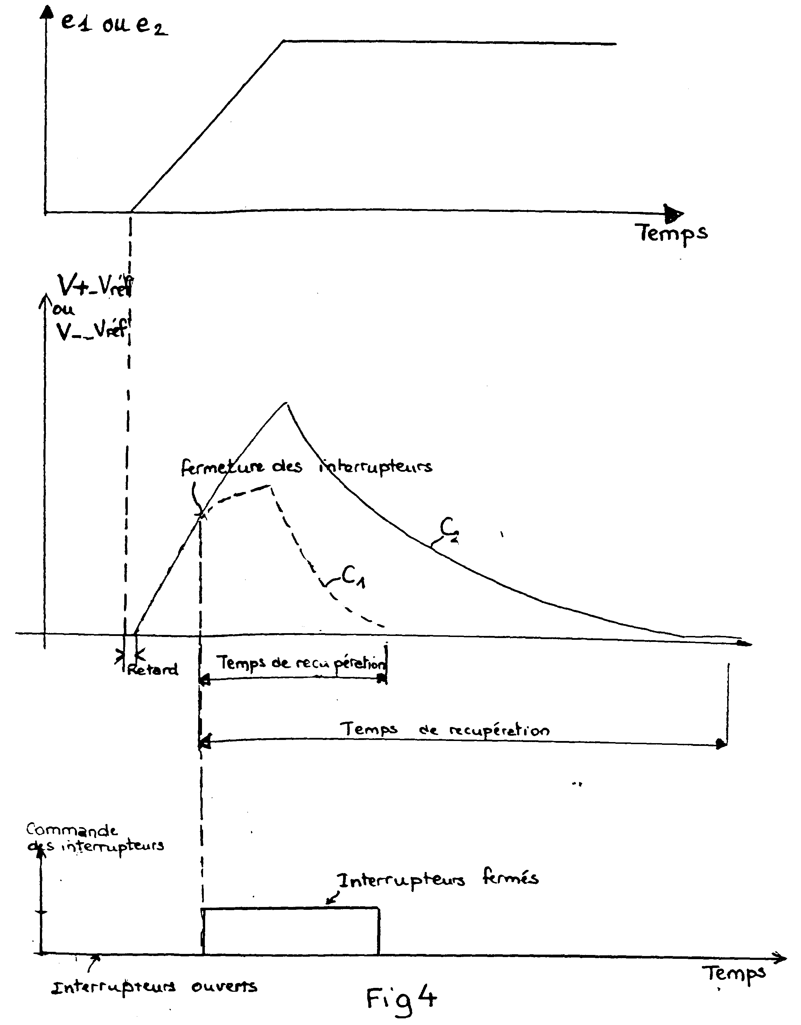

Sur la figure 4, la courbe C1 montre la tension en fonction du temps. La courbe C2 correspond à un récepteur dépourvu des interrupteurs et du circuit de pilotage.

## Revendications

1. Récepteur de ligne pour un réseau de transmission d'informations comportant un filtre (1) dont les deux entrées ($e_1$, $e_2$) sont reliées à un réseau de transmission d'informations de type réseau local et dont les deux sorties ($s_1$, $s_2$) sont reliées à un comparateur (4), caractérisé par le fait que le filtre (1) se compose de deux filtres passe- bande (13, 14) reliés chacun par un étage d'entrée (11 ou 12) au réseau et reliés l'un à l'autre, la sortie de chaque filtre (13 ou 14) étant connectée à ladite liaison (Vréf) entre les deux filtres par un interrupteur (61 ou 62) commandé par un circuit de commande (5) piloté par le signal de sortie du comparateur (4).

2. Récepteur selon la revendication 1, caractérisé par le fait que le circuit de commande (5) est constitué par une porte logique (51).

3. Récepteur selon l'une quelconque des revendication précédentes, caractérisé par le fait que chaque filtre passe-bande(13 ou 14) est du type pont de Wien.

4. Récepteur selon l'une quelconque des revendications précédentes, caractérisé par le fait que chaque étage d'entrée (11 ou 12) se compose d'une résistance ($R_1$) et d'un condensateur ($C_1$).

## Patentansprüche

1. Leitungsempfänger für ein Nachrichtenübertragungsnetz mit einem Filter (1), deren Eingänge (e1,e2) mit einem Lokales Netzwerk verbunden sind und deren Ausgänge (s1,s2) mit einem Vergleicher (4) verbunden sind, dadurch gekennzeichnet, dass der Filter (1) aus zwei miteinander verbundenen Bandpassfilter (13,14) besteht, dass jedes Filter (1) über eine Eingangsstufe (11,12) mit dem Netzwerk verbunden ist, dass der Ausgang jeden Filters (13,14) mit der Verbindung (Vref) zwischen den zwei Filter über einen Steuerschaltungsgesteuerteschalter (61,62) verbunden wird, und dass die Steuerschaltung (5) durch das Ausgangssignal des Vergleichers (4) gesteuert wird.

2. Empfänger nach Anspruch 1, dadurch gekennzeichnet, dass die Steuerschaltung (5) aus einem logik-Gatter (51) besteht.

3. Empfänger nach einem der vorhergehenden Ansprüche, dass jedes Bandpassfilter (13,14) aus einer Wien-Brückenschaltung besteht.

4. Empfänger nach einem der vorhergehenden Ansprüche, dass jeder Eingangstufe (11,12) aus einem Widerstand (R1) und einem Konsensator (C1) besteht.

## Claims

1. A line receiver for an information transmission network, comprising a filter (1), the two inputs (e1,e2) of which are connected to a local area information transmission network while the two outputs (s1,s2) are connected to a comparator (4), characterized in that the filter (1) is composed of two both connected bandpass filters (13,14), each connected by the way of a input stage (11,12) to the network, the output of each filter (13,14) being connected to the link (Vref) between the two filters by the way of a switch (61,62) controlled by a control circuit (4), which is controlled by the output signal of a comparator (4).

2. A receiver according to claim 1, characterized in that the control circuit (5) is composed of a logic gate (51).

3. A receiver according to anyone of the preceding claims, characterized in that each bandpass filter (13,14) is composed of an wien-bridge.

4. A receiver according to anyone of the preceding claims, characterized in that each input stage (11,12) is composed of a resistor (r1) and a capacitor (C1).

Fig. 1

Fig. 2

Fig. 3

Fig 4